# EUROPEAN PATENT SPECIFICATION

(11) **EP 3 845 072 B1**
(45) Date of publication and mention of the grant of the patent: **05.11.2025**
(21) Application number: 18939974.4
(22) Date of filing: 15.11.2018
(51) Int. Cl.: A23K 20/142, A23K 50/60, A23K 50/10

(54) **FEED SUPPLEMENT AND FEED FOR DAIRY COWS COMPRISING N-ACETYL-L-TRYPTOPHAN AS EFFECTIVE COMPONENT**
FUTTERZUSATZ UND FUTTER FÜR MILCHKÜHE MIT N-ACETYL-L-TRYPTOPHAN ALS WIRKSAME KOMPONENTE
COMPLÉMENT ALIMENTAIRE ET ALIMENT POUR VACHES LAITIÈRES COMPRENANT N-ACÉTYL-L-TRYPTOPHANE EN TANT QUE CONSTITUANT EFFICACE

(43) Date of publication of application: 07.07.2021
(73) Proprietor: CJ Cheiljedang Corporation, Seoul 04560 (KR)
(72) Inventor: PARK, Jinseung, Seoul 04560 (KR); JEON, Jinwoo, Seoul 04560 (KR); MOON, Jun Ok, Seoul 04560 (KR); LEE, Joo Young, Seoul 04560 (KR); LEE, Hong-Gu, Seoul 04560 (KR)
(74) Representative: Meissner Bolte Partnerschaft mbB
(86) International application number: PCT/KR2018/014039
(87) International publication number: WO 2020/101074

(56) References cited:
- EP-A1- 3 854 220
- WO-A1-2020/101322
- JP-A- S61 247 342
- JP-A- S61 247 342
- KR-A- 20040 095 561
- KR-A- 20140 146 638
- KR-A- 20170 044 575
- KR-A- 20180 056 226
- E J EDMONDS ET AL: "Absorption studies on tryptophan and acetyltryptophan", JOURNAL OF BIOLOGICAL CHEMISTRY, 1 November 1956 (1956-11-01), United States, pages 583, XP055708924, Retrieved from the Internet <URL:https://www.jbc.org/content/223/1/583.full.pdf> [retrieved on 20210730]
- KOLLMANN ET AL: "Effects of tryptophan supplementation on plasma tryptophan and related hormone levels in heifers and dairy cows", DOMESTIC ANIMAL ENDOCRINOLOGY, ELSEVIER, AMSTERDAM, NL, vol. 34, no. 1, 13 November 2007 (2007-11-13), pages 14 - 24, XP022342606, ISSN: 0739-7240, DOI: 10.1016/J.DOMANIEND.2006.09.005
- NAKANISHI YOSHITAKA: "Behavioural and Growth Effect of Oral Administration of Rumen Protected Tryptophan on Weanling Beef Calves", MEMOIRS OF THE FACULTY OF AGRICULTURE, KAGOSHIMA UNIVERSITY, vol. 34, 1 January 1998 (1998-01-01), pages 89 - 95, XP055829230
- LANGNER, R. R. ET AL.: "Absorption studies on tryptophan and acetyltryptophan", J. BIOL. CHEM., vol. 223, 1956, pages 583 - 588, XP055708924
- JO, H. H. ET AL.: "Improving productive performance of holstein dry cow through supplementing rumen-protected amino acid L-tryptophan (RPT", DAIRY FOR THE NEXT GENERATION. IDF WDS DAEJEON 2018, 19 October 2018 (2018-10-19), pages 010

## Description

### TECHNICAL FIELD

The present disclosure relates to a feed additive composition for dairy cattle including N-acetyl-L-tryptophan (NALT) as an active ingredient for use in enhancing immunity of calves born from dairy cattle; and a feed for use in enhancing immunity of a calf born from dairy cattle, including the feed additive composition.

This work was supported by the Korea Institute of Planning and Evaluation for Technology in Food, Agriculture, and Forestry through the Agri-Bio Industry Technology Development Program funded by the Ministry of Agriculture, Food and Rural Affairs (Project No. 117030-3).

### BACKGROUND ART

A dry period of Holstein dairy cattle is an important period for resistance to diseases such as mastitis, body tissue reconstruction for calving, and health of calves after birth. Particularly in the dry period of dairy cattle corresponding to the late stage of gestation (two months before calving), appetite may decrease since the digestive tract may be compressed due to rapid growth of a fetus or a uterus (80% of growth of a calf to be born takes place), and hormone balance may be interfered with due to secretion of hormones for preparing calving and lactation. In general, although milking cows may continuously produce milk by stimulating the mammary gland until calving without having a dry period, it would result in genetic changes in a hormonal cycle present only in the dry period, unlike the milking period. Also, inappropriate management for dairy cattle during the dry period may affect milk production and reproduction performance of the milking cows after calving in terms of epigenomics, thereby decreasing productivity of the dairy cattle and affecting growth of the fetus and the calf after birth. In this regard, supplementation of nutrients required for the growth of the fetus during the dry period and an increase in productivity of milking cows after calving are important factors to be considered.

L-Tryptophan is one of essential amino acids (EAAs) that are nutritionally important in ruminant animals and is an essential component of protein synthesis. In addition, L-tryptophan, as a precursor of serotonin, melatonin, and niacin, is known to have antioxidant effects and stress-relieving effects; promote secretion of cholecystokinin (CCK), which is a gastrointestinal hormone in the small intestine; and increase starch digestibility by the secretion and activation of pancreas α-amylase. Although L-tryptophan deficiency may adversely affect feed intake and growth performance, it is considered that most amino acids including L-tryptophan are not deficient in ruminant animals due to rumen fermentation induced by microbial protein production. However, in the late stage of gestation, feed intake of dry cows decrease, but NRC L-tryptophan requirements for protein synthesis of a fetus according to National Research Council (NRC, 2001) rapidly increase, and thus L-tryptophan, which is likely to be deficient, is an amino acid that needs to be supplemented.

When ruminant animals are supplemented with L-tryptophan, L-tryptophan is used in rumen microbes, resulting in an increase in microbial protein synthesis. However, as a result, ammonia produced in large quantities cannot be used, and efficiency of feed protein decreases. Thus, there is a need to feed L-tryptophan in the form of a rumen-bypass amino acid that is not degraded by microbes in the rumen but degraded and absorbed in the small intestine of ruminant animals. In general, in order to protect feed proteins from microbes in the rumen, various physiochemical treatment methods such as heat treatment, formaldehyde treatment (Subuh et al., Animal Feed Science and Technology, Vol. 57(3), 257-265), tannin treatment, ethanol treatment, and lignosulfonate treatment, and methods of coating the surface with a mixture of a fatty acid and pH sensitive polymer or with a mixture of an unsaturated fatty acid and a mineral have been studied. JP 61-247342 describes feed compositions for ruminant animals comprising N-acetyltryptophan or its salt. Edmonds et al., "Absorption Studies on Tryptophan and Acetyltryptophan", J. Biol. Chem. 1956

(223), p. 583 to 588, relates to experiments on the absorption of tryptophan isomers in rats. WO 2020/101332 A1 describes feed additives for cattle comprising N-acetyl-L-tryptophan.

### DESCRIPTION OF EMBODIMENTS

### TECHNICAL PROBLEM

As a result of intensive efforts to develop feed additives for increasing feed intake and productivity of dairy cattle, the present inventors have found that by feeding *N*-acetyl-L-tryptophan, which has a conjugate form of acetate and L-tryptophan, feed intake of dairy cattle, weight of calves born from dairy cattle, milk yield of dairy cattle, and milk protein yield of dairy cattle are increased and immunity of calves born from dairy cattle enhanced, thereby completing the present disclosure.

### SOLUTION TO PROBLEM

An object of the present disclosure is to provide a feed additive composition for dairy cattle comprising N-acetyl-L-tryptophan as an active ingredient.

Another object of the present disclosure is to provide a feed comprising the feed additive composition for dairy cattle.

Another object of the present disclosure is to provide methods of increasing feed intake of dairy cattle, increasing weight of calves born from dairy cattle, increasing milk yield of dairy cattle, increasing milk protein yield of dairy cattle, and enhancing immunity of calves born from dairy cattle, the methods including feeding the dairy cattle with the feed additive composition or feed for dairy cattle comprising N-acetyl-L-tryptophan as an active ingredient.

### ADVANTAGEOUS EFFECTS OF DISCLOSURE

*N*-Acetyl-L-tryptophan (NALT) according to the present disclosure increases feed intake of dairy cattle, increases weight of calves born from dairy cattle, increases milk yield of dairy cattle, increases milk protein yield of dairy cattle, and enhances immunity of calves born from dairy cattle, and thus it may be effectively used in a feed additive composition or a feed as an active ingredient.

### BRIEF DESCRIPTION OF DRAWINGS

FIG. 1 is a graph showing changes in feed intake of dry cows in the later stage of gestation by treatment of *N*-acetyl-L-tryptophan (NALT). Here, *p<0.05 refers to statistical significance when compared with a control.
FIG. 2 is a graph showing changes in milk fat yield of dry cows after calving by treatment of *N*-acetyl-L-tryptophan.
FIG. 3 is a graph showing changes in milk protein yield of dry cows after calving by treatment of *N*-acetyl-L-tryptophan.

### BEST MODE

An aspect of the present disclosure provides a feed additive composition for dairy cattle comprising *N*-acetyl-L-tryptophan (NALT) as an active ingredient for use in enhancing immunity of a calf born from dairy cattle.

Specifically, the feed additive composition for dairy cattle for the use of the present disclosure may include *N*-acetyl-L-tryptophan or a salt thereof.

As used herein, the term *"*N-acetyl-L-tryptophan (NALT)" refers to a compound having a structure represented by Formula 1 below. Although *N*-acetyl-L-tryptophan is known to have various properties, such as therapeutic effects on the brain, spinal cord, and nerve damage and preventive effects on oxidation of proteins together with magnesium sulfate, effects of a feed including NALT on increasing feed intake of dairy cattle, increasing weight of calves born from dairy cattle, increasing milk yield of dairy cattle, increasing milk protein yield of dairy cattle, enhancing immunity of calves born from dairy cattle, and the like have not been reported and were first identified by the present inventors.

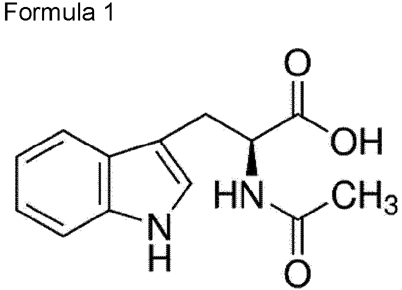

In view of the objects of the present disclosure, *N*-acetyl-L-tryptophan may be used without limitation as to sources thereof, and preparation of *N*-acetyl-L-tryptophan may be performed using any method well known in the art.

The term "L-tryptophan" refers to one of essential amino acids (EAAs) nutritionally important in ruminant animals which is an essential component of protein synthesis. Metabolites of L-tryptophan may allow organs to maintain homeostasis by regulating metabolism of nutrients and affect growth, development, reproduction, and health of animals. In addition, L-tryptophan, as a precursor of serotonin, which acts as a neurotransmitter, may relieve stress by regulating emotional behavior after passing through the blood-brain barrier.

As used herein, the term "dairy cattle" refers to those cows among cows bred as livestock which are bred for the purpose of milk production, and Holstein cows, Jersey cows, Guernsey cows, and Ayrshire cows are major dairy breeds. In the present disclosure, any cows are included within the scope of the present disclosure regardless of breed, age, and the like, as long as the cows are milking. Specifically, the dairy cattle may be dairy cattle in a dry period, more specifically Holstein cows in a dry period, but are not limited thereto. The term "dry period" may refer to a period after a lactation period, a preparation period for subsequent lactation, or a period before calving. The dry period of dairy cattle may last for about 60 days and may be, for example, 8 weeks, 7 weeks, or 6 weeks before calving, without being limited thereto. Dairy cattle in the dry period may suffer from insufficient energy due to a decrease in feed intake.

As used herein, the term "feed additive" refers to a substance added to a feed for the purpose of enhancing productivity or overall health of target animals, but is not limited thereto. In addition, the feed additive may be an auxiliary feed under the Control of Livestock and Fish Feed Act.

The feed additive composition of the present disclosure may further include nucleotides, amino acids, calcium, phosphoric acid, and organic acids for enhancement of productivity or overall health of target animals, in addition to N-acetyl-L-tryptophan or a salt thereof, but is not limited thereto.

As used herein, the term "salt" refers to a substance consisting of a cation and an anion that are bound by electrostatic attraction, and may generally be a metal salt, a salt with an organic base, a salt with an inorganic acid, a salt with an organic acid, a salt with a basic or acidic amino acid, or the like. For example, the metal salt may be an alkali metal salt (*e.g.*, a sodium salt and a potassium salt), an alkaline earth metal salt (*e.g.,* a calcium salt, a magnesium salt, and a barium salt), an aluminum salt, or the like; the salt with an organic base may be a salt with triethylamine, pyridine, picoline, 2,6-lutidine, ethanolamine, diethanolamine, triethanolamine, cyclohexylamine, dicyclohexylamine, *N,N*-dibenzylethylenediamine, or the like; the salt with an inorganic acid may be a salt with hydrochloric acid, hydrobromic acid, nitric acid, sulfuric acid, phosphoric acid, or the like; the salt with an organic acid may be a salt with formic acid, acetic acid, trifluoroacetic acid, phthalic acid, fumaric acid, oxalic acid, tartaric acid, maleic acid, citric acid, succinic acid, methanesulfonic acid, benzenesulfonic acid, *p-*toluenesulfonic acid, or the like; the salt with an basic amino acid may be a salt with arginine, lysine, ornithine, or the like; and the salt with an acidic amino acid may be a salt with aspartic acid, glutamic acid, or the like.

In a further aspect outside the scope of the present invention, the feed additive composition for dairy cattle may be for increasing feed intake of dairy cattle.

A further aspect outside the scope of the present invention relates to a use of the feed additive composition for dairy cattle including *N-*acetyl-L-tryptophan as an active ingredient for increasing feed intake of dairy cattle.

When the feed additive composition for dairy cattle including NALT as an active ingredient of the present disclosure is fed to dairy cattle, a numerical increase in the overall feed intake of the NALT-treated group was confirmed in comparison with the feed intake of the control. Among these, a feed intake (7.69 kg) of the NALT-treated group at week 4, although not being statistically significant, showed a numerically increased pattern by 1.43 kg when compared with a feed intake (6.46 kg) of the control. Particularly, a feed intake of the NALT-treated group at week 2 showed a statistically significant increase when compared with a feed intake of the control (p<0.05).

In the present disclosure, the feed intake of dairy cattle may be measured by recording an amount of the feed left over, and a daily feed intake may be measured by recording an amount of the feed left over at a certain time every day, without being limited thereto.

In a further aspect outside the scope of the present invention, the feed additive composition for dairy cattle may be for increasing weight of calves born from dairy cattle.

A further aspect outside the scope of the present invention relates to a use of the feed additive composition for dairy cattle including *N*-acetyl-L-tryptophan as an active ingredient for increasing weight of calves born from dairy cattle.

When the feed additive composition for dairy cattle including NALT as an active ingredient of the present disclosure was fed, it was confirmed that birth weights (week 0) of calves born from NALT-treated dairy cattle were greater than those of the control by 5.47 kg on average. Also, average weights of calves born from the NALT-treated dairy cattle (at week 2, week 4, week 6, and week 8) were greater than average weights of calves born from dairy cattle of the control by about 5 kg (5.1 kg, 4.67 kg, 4.22 kg, and 5.9 kg, respectively).

In the present disclosure, the birth weights of calves born from dairy cattle may be measured immediately after calving, specifically after drying the body surface before feeding colostrum immediately after calving, without being limited thereto. Also, in the present disclosure, the average weight of calves born from dairy cattle may be measured, specifically at an interval of 2 weeks, without being limited thereto.

In a further aspect outside the scope of the present invention, the feed additive composition for dairy cattle may be used for increasing milk yield of dairy cattle.

A further aspect outside the scope of the present invention relates to a use of the feed additive composition for dairy cattle including N-acetyl-L-tryptophan as an active ingredient for increasing milk yield of dairy cattle.

When the feed additive composition for dairy cattle including NALT as an active ingredient of the present disclosure is fed to dairy cattle, an increase in the milk yield of the NALT-treated group (week 0) immediately after calving was confirmed in comparison with the milk yield of the control immediately after calving (Table 4). In addition, the average milk yield of the NALT-treated group was increased by 4 kg or more when compared with the average milk yield of the control.

In the present disclosure, the milk yield of dairy cattle may be measured by recording an amount of milk obtained during milking, specifically by recording the amount of milk obtained during milking at a certain time every day (at an interval of 12 hours), without being limited thereto. The increase in the milk yield of dairy cattle may continue for 10 weeks, 9 weeks, or 8 weeks after calving, but is not limited thereto.

In a further aspect outside the scope of the present invention, the feed additive may be used for increasing the milk protein yield of dairy cattle.

A further aspect outside the scope of the present invention relates to a use of the feed additive composition for dairy cattle including N-acetyl-L-tryptophan as an active ingredient for increasing the milk protein yield of dairy cattle.

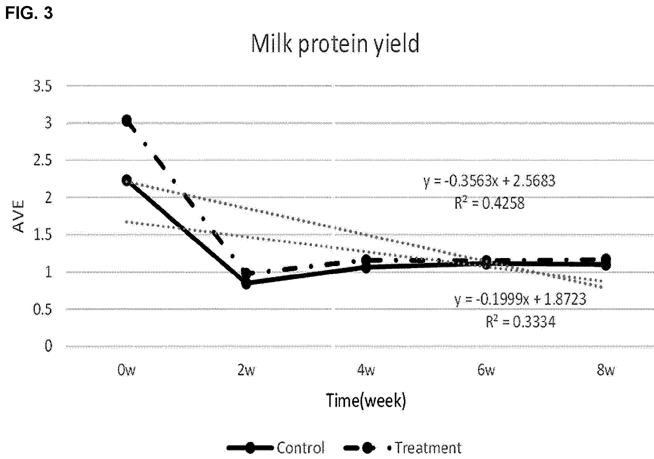

When the feed additive composition for dairy cattle including NALT as an active ingredient of the present disclosure is fed to dairy cattle, a higher milk protein yield was confirmed in the colostrum of the NALT-treated group immediately after calving, when compared with the milk protein yield in the colostrum of the control immediately after calving (FIG. 3 and Table 4).

In the present disclosure, the milk protein yield of dairy cattle may be measured by analyzing chemical compositions of milk obtained during milking, specifically by pooling raw milk obtained during milking at a certain time every day (at an interval of 12 hours) and analyzing the milk using a milk scanner FT1 (Foss Alle 1 DK-3400 Hilleroed, Denmark), but is not limited thereto.

In the present disclosure, the feed additive composition for dairy cattle is useful for enhancing immunity of calves born from dairy cattle.

The present disclosure provides a feed additive composition for dairy cattle including N-acetyl-L-tryptophan as an active ingredient for use in enhancing immunity of calves born from dairy cattle.

In an embodiment of the present disclosure, when the feed additive composition for dairy cattle including NALT as an active ingredient of the present disclosure is fed to dairy cattle, significant differences were confirmed in monocyte index, initial index of mean corpuscular volume (MCV), and initial index of mean corpuscular hemoglobin (MCH) between the calves born from dairy cattle of the NALT-treated group and the calves born from dairy cattle of the control (Table 5).

In the present disclosure, the enhancement of immunity may be measured by analyzing changes in hematological properties such as white blood cells, lymphocytes, monocytes, granulocytes, mean corpuscular volume, mean corpuscular hemoglobin, and platelets in blood, specifically by centrifuging collected blood to separate plasma, aliquoting cells into an EDTA-treated vacutainer, and analyzing the cells using a VetScan HM2 Hematology System (ABAXIS, CA, USA), but is not limited thereto.

In the present disclosure, the N-acetyl-L-tryptophan may be rumen-protected.

As used herein, the term "rumen-protected" means that nutrients are processed to be degraded and absorbed in the small intestine without being degraded in a ruminant stomach by microbial enzymes and is also referred to as rumen-bypass. The term "ruminant stomach" refers to a special alimentary canal found in some animals of the order Artiodactyla and is divided into four compartments for so-called rumination, i.e., rumen, reticulum, omasum, and abomasum. A process of regurgitating ingesta and rechewing the regurgitated ingesta for further breakdown thereof is called rumination, and a stomach enabling this process is the ruminant stomach. Since microbes live in the ruminant stomach, ruminant animals have the ability to digest plant cellulose, which is generally indigestible in other animals, to produce energy.

The *N*-acetyl-L-tryptophan of the present disclosure, having a conjugate form of acetate and L-tryptophan, is rumen-protected such that L-tryptophan is absorbed in the small intestine without being degraded by microbial enzymes in the ruminant stomach.

An amount of *N*-acetyl-L-tryptophan according to the present disclosure may be determined by one or ordinary skill in the art in consideration of a target animal, species and body weight of the target animal, feeding time, type of a feed, a purpose of feeding, and the like. Specifically, the amount of *N*-acetyl-L-tryptophan may be in the range of 0.01% (w/w) to 5.0% (w/w), 0.01% (w/w) to 4.0% (w/w), 0.05% (w/w) to 3.0% (w/w), 0.05% (w/w) to 2.5% (w/w), 0.05% (w/w) to 2.0% (w/w), or 0.05% (w/w) to 1.5% (w/w), , and more specifically 1.5% (w/w), based on a total dry weight of the feed, without being limited thereto.

Another aspect of the present disclosure provides a feed for use in enhancing immunity of a calf born from dairy cattle, comprising the feed additive composition for dairy cattle.

Specifically, the feed of the present disclosure may include a feed additive composition for dairy cattle including N-acetyl-L-tryptophan or a salt thereof.

In this regard, descriptions of the "*N*-acetyl-L-tryptophan", "dairy cattle", "feed additive", and "rumen-protected" are as provided above.

As used herein, the term "feed" refers to any natural or artificial diet, one meal, or ingredients of the meal that an individual eats, ingests, and digests or which is suitable therefor.

Types of the feed are not particularly limited, and any feeds commonly used in the art may also be used. Non-limiting examples of the feed may include vegetable feeds such as grains, root vegetables, food processing byproducts, algae, fibers, pharmaceutical byproducts, oils, starches, Cucurbitaceae vegetables, or byproducts of grains; and animal feeds such as proteins, inorganic substances, oils and fats, minerals, single-cell proteins, animal planktons, or foods. These feeds may be used alone or in a combination of at least two thereof.

A further aspect outside the scope of the present invention relates to a method of increasing feed intake of dairy cattle, the method including feeding the dairy cattle with a feed additive composition or feed for dairy cattle comprising *N*-acetyl-L-tryptophan as an active ingredient.

Specifically, the method of increasing the feed intake of dairy may include a step of feeding the dairy cattle with a feed additive composition or feed for dairy cattle including N-acetyl-L-tryptophan or a salt thereof.

A further aspect outside the scope of the present invention relates to a method of increasing weight of calves born from dairy cattle, the method including feeding the dairy cattle with a feed additive composition or feed for dairy cattle comprising *N-*acetyl-L-tryptophan as an active ingredient.

Specifically, the method of increasing weight of calves born from dairy cattle may include a step of feeding the dairy cattle with a feed additive composition or feed for dairy cattle including *N*-acetyl-L-tryptophan or a salt thereof.

A further aspect outside the scope of the present invention relates to a method of increasing milk yield of dairy cattle, the method including feeding the dairy cattle with a feed additive composition or feed for dairy cattle comprising N-acetyl-L-tryptophan as an active ingredient.

Specifically, the method of increasing milk yield of dairy cattle may include a step of feeding the dairy cattle with a feed additive composition or feed for dairy cattle including *N*-acetyl-L-tryptophan or a salt thereof.

A further aspect outside the scope of the present invention relates to a method of increasing milk protein yield of dairy cattle, the method including feeding the dairy cattle with a feed additive composition or feed for dairy cattle comprising *N*-acetyl-L-tryptophan as an active ingredient.

Specifically, the method of increasing milk protein yield of dairy cattle may include a step of feeding the dairy cattle with a feed additive composition or feed for dairy cattle including *N*-acetyl-L-tryptophan or a salt thereof.

A further aspect outside the scope of the present invention relates to a method of enhancing immunity of calves born from dairy cattle, the method including feeding the dairy cattle with a feed additive composition or feed for dairy cattle comprising *N-*acetyl-L-tryptophan as an active ingredient.

Specifically, the method of enhancing immunity of calves born from dairy cattle may include a step of feeding the dairy cattle with a feed additive composition or feed for dairy cattle including *N*-acetyl-L-tryptophan or a salt thereof.

In this regard, descriptions of the "*N*-acetyl-L-tryptophan", "dairy cattle", "feed additive", "rumen-protected", and "feed" are as provided above.

The amount of *N*-acetyl-L-tryptophan contained in the feed additive composition for dairy cattle is as described above.

These methods may be performed under breeding management technologies well known in the art, and specifically, the feed may be fed at a certain time every day, without being limited thereto. Also, the amount of feed offered is not particularly limited.

### MODE OF DISCLOSURE

Hereinafter, the present disclosure will be described in more detail with reference to the following examples. However, the following examples are merely presented to exemplify the present disclosure, and the scope of the present disclosure is not limited thereto.

### Example 1. Experimental Animal, Experimental Feed, and Experimental Method

### Example 1-1. Animal Used in Experiment

From among Holstein Friesian cows in the late stage of gestation corresponding to 60 days before calving, 8 cows were selected in consideration of calving time (expected calving date ± 15 days), the number of calving (calving number), and the like, and 4 cows were assigned to each of a control (untreated) and a treated group.

### Example 1-2. Feeding Experimental Feed

In the present disclosure, as a basal diet fed during a dry period and a milking period, total mixed ration (TMR), roughage, and concentrates were provided in accordance with NRC (2001) nutrition requirements for dry cows. In the case of the treated group, evaluation was performed by supplementing *N*-acetyl-L-tryptophan (NALT) to the basal diet. Results of analysis of chemical composition and amino acids of the basal diet are as shown in Table 1. Newborn calves were fed with colostrum for 3 days and then fed with milk obtained during a milking process for 8 weeks.

**Table 1**

| Chemical composition and amino acids of basal diet | | | |
|---|---|---|---|
| Feed | | Control | Treated |
| | TMR, kg/d | 1.0 | 1.0 |
| | Roughage, kg/d | 98 | 9.8 |
| | Concentrates, kg/d | 5.0 | 5.0 |
| | NALT, g/d | 00 | 15.0 |

| Chemical composition, g/day (DM basis) | | | |
|---|---|---|---|
| | Crude Protein | 1529.92 | 1529.92 |
| | Crude Fat | 213.36 | 213.36 |
| | Crude Fiber | 2558.43 | 2558.43 |
| | Crude Ash | 1008.48 | 1008.48 |
| | Calcium | 92.25 | 92.25 |
| | Phosphorus | 39.48 | 3948 |

| Amino acids, g/d (DM basis) | | | |
|---|---|---|---|
| | Tryptophan | 7.39 | 19.84 |
| | Threonine | 49.76 | 49.76 |
| | Serine | 55.29 | 55.29 |
| | Proline | 84.34 | 84.34 |
| | Valine | 70.60 | 70.60 |
| | Isoleucine | 46.07 | 46.07 |
| | Leucine | 95.49 | 95.49 |
| | Tyrosine | 2920 | 29.20 |
| | Methionine | 27.89 | 27.89 |
| | Cysteine | 40.87 | 40.87 |
| | Lysine | 56.02 | 56.02 |
| | Glycine | 63.56 | 63.56 |
| | Alanine | 74.71 | 74.71 |
| | Arginine | 78.16 | 78.16 |
| | Glutamic acid | 187.09 | 187.09 |
| | Aspartic acid | 130.43 | 130.43 |
| | Histidine | 27.75 | 27.75 |
| | Phenylalanine | 57.03 | 57.03 |

### Example 1-3. Designing Experimental Method

Evaluation of feed feeding before calving by feeding *N*-acetyl-L-tryptophan was performed for 60 ± 8 days (error caused by difference in expected calving dates). The control was fed with the basal diet, and the treated group was fed with the basal diet supplemented with 15 g of NALT. During an adaptation period of one week, the amount of NALT offered was gradually increased to 5 g, 10 g, and 15 g from the initial feeding (week 0), and a mixture of NALT with 1 kg of the total mixed ration was fed by top dressing at 9 a.m. every morning.

### Reference Example 2. Analysis of Feed Intake

An amount of the feed left over was recorded for each cow at 9 a.m. every morning to measure a daily feed intake.

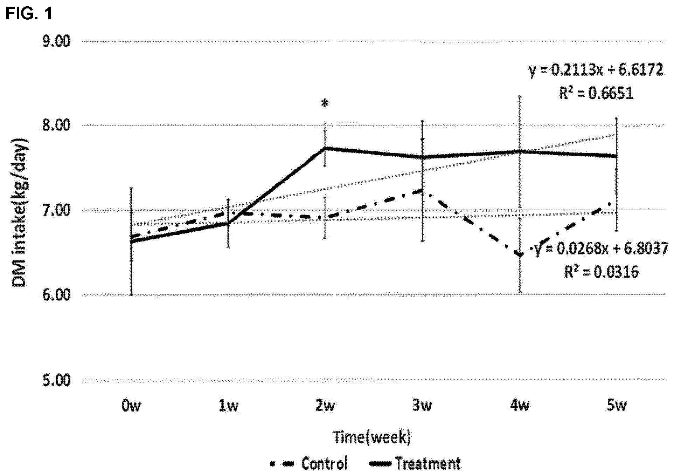

Analysis results of feed intakes of the control and the NALT-treated group during the evaluation period of 6 weeks in total during the dry period are as shown in Table 2. It was confirmed that the overall feed intake of the NALT-treated group was numerically increased when compared to the feed intake of the control (FIG. 1). Among these, a feed intake (7.69 kg) of the NALT-treated group at week 4, although not being statistically significant, showed a numerically increased pattern by 1.43 kg when compared with a feed intake (6.46 kg) of the control. In particular, a feed intake of the NALT-treated group at week 2 showed a statistically significant increase when compared with a feed intake of the control (p<0.05).

**Table 2**

| Analysis of feed intake of dairy cattle according to NALT feeding | | | | |
|---|---|---|---|---|
| Week | Treatment | | SEM | P-value |
| | Control (untreated) | Treated (supplemented with NALT) | | |
| 0 | 6.69 | 6.63 | 0.334 | 0.934 |
| 1 | 6.97 | 6.85 | 0.156 | 0.700 |
| 2 | 6.91 | 7.73 | 0.189 | 0.024 |
| 3 | 7.23 | 7.62 | 0.361 | 0.613 |
| 4 | 6.46 | 7.69 | 0.414 | 0.146 |
| 5 | 7.12 | 7.63 | 0.286 | 0.389 |

When the feed additive composition for dairy cattle including NALT as an active ingredient of the present disclosure was fed, an amount of absorption of L-tryptophan increased in the small intestine, and thus secretion of ghrelin (hunger hormone) was promoted. As a result, secretion of cholecystokinin (biliary hormone) and α-amylase (starch-degrading enzyme) was also promoted, thereby increasing the feed intake. Also, as the amount of absorption of L-tryptophan increased in the small intestine, secretion of melatonin, serotonin, and niacin was also promoted, resulting in promotion of intracellular metabolism and effects on the digestive process and gastrointestinal motility, thereby increasing the feed intake. That is, it was confirmed that NALT improved starch digestibility in the small intestine.

### Reference Example 3. Analysis of Weight of Calf Born from Dairy Cattle

Weights of calves born from dairy cattle used for the experiment were measured after drying the body surface immediately after calving (before feeding colostrum; using a scale, GL-6000S Series, G-Tech International Co., LTD), and then weights were measured four times in total for 8 weeks at an interval of 2 weeks (weight before feeding milk). Colostrum was obtained from mother cows and fed to calves at 3 a.m. and 3 p.m. until 3 days after calving. Then, 3.8 L of milk was provided per day, and the concentrates were available without limitation from a feed bucket separately for individual animals.

Birth weights of the calves born from the NALT-treated dry cows and weights thereof measured for 8 weeks at an interval of 2 weeks are as shown in Table 3. Specifically, birth weights (week 0) of calves born from the NALT-treated dairy cattle were greater than those of the control by 5.53 kg on average, and average weights of calves born from the NALT-treated dairy cattle (at week 2, week 4, week 6, and week 8) were greater than average weights of calves born from dairy cattle of the control by about 5 kg (5.1 kg, 4.67 kg, 4.22 kg, and 5.9 kg, respectively).

**Table 3**

| Analysis of weight of calf born from dairy cattle according to NALT feeding | | | |
|---|---|---|---|
| Week | Treatment | | SEM |
| | Control (untreated) | Treated (supplemented with NALT) | |
| 0 wk | 35.90 | 41.43 | 3.063 |
| 2 wk | 40.95 | 46.05 | 3.085 |
| 4 wk | 48.08 | 52.75 | 3.381 |
| 6 wk | 56.73 | 60.95 | 3.601 |
| 8 wk | 63.80 | 69.70 | 3.609 |
| total AVG² | 49.09 | 54.18 | 3.316 |
| Increment | 27.90 | 28.28 | 1.127 |

When the feed additive composition for dairy cattle including NALT as an active ingredient of the present disclosure was fed, due to an increase in absorption of L-tryptophan in the small intestine, secretion of melatonin was promoted. Accordingly, secretion of growth hormone (GH) was promoted, thereby increasing weights of the calves. In addition, since nutrients were sufficiently supplied to the calves by the increased feed intakes of the mother cows, the weights of the calves were increased.

### Reference Example 4. Compositional Analysis of Milk of Milking Cow

### Example 4-1. Analysis of Milk Yield

Milk yield of each of the 8 milking cows used in the present disclosure was recorded at 3 a.m. and 3 p.m. every day for 8 weeks, and average milk yield was calculated after pooling them every two weeks after calving.

Results of milk yield analysis of the control and the NALT-treated group for 8 weeks after calving are as shown in Table 4. A milk yield of the NALT-treated group immediately after calving (week 0) was increased by 4 kg or more on average when compared with the milk yield of the control, and average milk yield of the NALT-treated group was increased by 4 kg or more when compared with average milk yield of the control.

**Table 4**

| Analysis of milk yield and milk quality of dairy cattle after calving according to NALT feeding | | | | |
|---|---|---|---|---|
| | | Treatment | | SEM |
| | | Control (untreated) | Treated (supplemented with NALT) | |
| Milk yield, kg | | | | |
| | 0 wk | 19.83 | 24.03 | 1.894 |
| | total AVG² | 31.77 | 35.44 | 2.401 |
| Milk protein, % | | | | |
| | 0 wk | 12.20 | 12.81 | 1.219 |
| | total AVG² | 4.83 | 4.88 | 0.266 |
| Milk fat, % | | | | |
| | 0 wk | 9.64 | 6.25 | 0.985 |
| | total AVG¹ | 6.62 | 6.31 | 0.380 |
| Somatic cells, x 10³ | | | | |
| | 0 wk | 1299.75 | 4867.95 | 2388.421 |
| | total AVG² | 383.85 | 1086.15 | 473.554 |
| Lactose, % | | | | |
| | 0 wk | 3.36 | 3.48 | 0.108 |
| | total AVG² | 4.37 | 4.38 | 0.036 |
| Solid-not Fat, % | | | | |
| | 0 wk | 16.35 | 17.17 | 1.153 |
| | total AVG² | 9.88 | 9.95 | 0.259 |
| Milk urea nitrogen, mg/dL | | | | |
| | 0 wk | 23.80 | 24.43 | 1.735 |
| | total AVG² | 16.29 | 16.49 | 0.578 |
| Aceton | | | | |
| | 0 wk | 0.00 | 0.00 | 0.000 |
| | total AVG² | 0.04 | 0.07 | 0.025 |
| BHB | | | | |
| | 0 wk | 0.00 | 0.00 | 0.000 |
| | total AVG² | 0.03 | 0.04 | 0.01 |
| Cas.B | | | | |
| | 0 wk | 9.32 | 9.76 | 0.943 |
| | total AVG² | 3.66 | 3.71 | 0.207 |
| Mono FA | | | | |
| | 0 wk | 2.50 | 1.35 | 0.505 |
| | total AVG² | 1.74 | 1.70 | 0.162 |
| Poly FA | | | | |
| | 0 wk | 0.39 | 0.34 | 0.042 |
| | total AVG² | 0.36 | 0.36 | 0.010 |
| Saturated FA | | | | |
| | 0 wk | 7.18 | 4.95 | 0.541 |
| | total AVG² | 4.51 | 4.20 | 0.217 |
| Total FA | | | | |
| | 0 wk | 2.87 | 1.38 | 0.593 |
| | total AVG² | 2.20 | 2.16 | 0.211 |

When the feed additive composition for dairy cattle including NALT as an active ingredient of the present disclosure was fed, it was confirmed that satisfied requirements of essential amino acids led to improvement of productivity, such as the amount of milk of milking cows.

### Example 4-2. Analysis of Milk Quality

Raw milk was pooled at 3 a.m. and 3 p.m. every 14 days after calving when lactation was initiated, and chemical compositions contained in milk, i.e., milk fat, milk protein, lactose, solid-not-fat (SNF), somatic cells, milk urea nitrogen (MUN), acetone, beta-hydroxybutyrate (BHB), casein-beta, mono- and poly-unsaturated fatty acids, saturated fatty acids, and total fatty acid, were analyzed using a milk scanner FT1 (Foss Alle 1 DK-3400 Hilleroed, Denmark).

Results of milk quality analysis of the control and the NALT-treated group for 8 weeks after calving are as shown in Table 4.

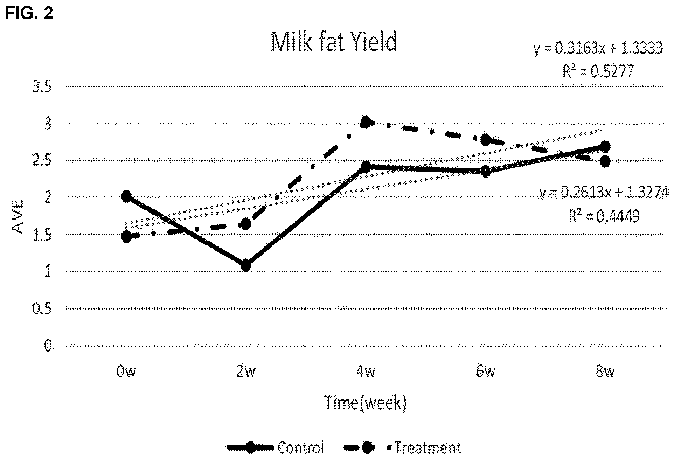

The feeding of NALT did not affect the changes in quality of milk. Specifically, as a result of examining changes in the milk fat yield of the NALT-treated group on a weekly basis, milk fat yield of colostrum of the NALT-treated group immediately after calving was lower than that of the control. However, while the milk fat yield of the control showed a tendency to decrease as the experiment progressed, the milk fat yield of the NALT-treated group showed a tendency to be maintained constantly (FIG. 2). As a result of examining changes in the pattern of the milk protein yield of the NALT-treated group on a weekly basis, milk protein yield of colostrum of the NALT-treated group immediately after calving, although not being statistically significant, was higher than that of the control (FIG. 3).

### Example 5. Hematological Analysis

Blood was collected from dairy cattle and calves during 6 weeks of the dry period and immediately after calving via the jugular vein before feeding a morning feed every 2 weeks for 8 weeks. The collected blood was aliquoted into a serum tube (BD Vacutainer, Plymouth, UK) and a heparin tube (Becton-Dickinson, Belliver Industrial Estate, Plymouth, PL6 7BP, UK) and centrifuged (3,500 rpm, 15 min, 20°C) to separate plasma.

### Example 5-1. Analysis of Changes in Hematological Properties

Blood samples for analysis of changes in hematological properties such as white blood cells (WBC), lymphocytes, monocytes, granulocytes, mean corpuscular volume, mean corpuscular hemoglobin, and platelets were aliquoted into an ethylenediaminetetraacetic acid (EDTA)-treated vacutainer (Becton-Dickinson, Franklin Lakes, NJ, USA) and analyzed using a VetScan HM2 Hematology System (ABAXIS, CA, USA).

Analysis results of changes in hematological properties of the control and the NALT-treated dairy cattle for 6 weeks of the dry period and 8 weeks of the experiment after calving are as shown in Table 5 (dry period) and Table 6 (after calving). The hematological properties of the NALT-treated dairy cattle were not significantly different from those of the control. That is, the feeding of NALT did not significantly affect the hematological properties of dairy cattle during the dry period or after calving.

**Table 5**

| Change in hematological properties of dairy cattle in dry period according to NALT feeding | | | | | |
|---|---|---|---|---|---|
| Item | | Treatment¹ | | | |
| | | Control | NALT | SEM | P-value |
| WBC, 4-12K/uL | | | | | |
| | 0 wk | 7.45 | 10.45 | 1.248 | 0.258 |
| | total AVG² | 9.04 | 11.91 | 1.530 | 0.427 |
| Lymphocyte, 2.5-7.5K/uL | | | | | |
| | 0 wk | 3.86 | 7.68 | 1.441 | 0.250 |
| | total AVG² | 4.52 | 7.88 | 1.453 | 0.342 |
| Monocyte, 0-0.84K/uL | | | | | |
| | 0 wk | 0.26 | 0.48 | 0.127 | 0.413 |
| | total AVG² | 0.69 | 0.74 | 0.050 | 0.338 |
| Granulocyte, 0.6-6.7K/uL | | | | | |
| | 0 wk | 3.33 | 3.89 | 0.433 | 0.259 |
| | total AVG² | 3.83 | 3.29 | 0.215 | 0.308 |
| MCV, 40-60fL | | | | | |
| | 0 wk | 47.00 | 46.75 | 0.934 | 0.905 |
| | total AVG² | 46.85 | 47.54 | 0.794 | 0.638 |
| MCH, 11-17pg | | | | | |
| | 0 wk | 16.58 | 16.01 | 0.267 | 0.555 |
| | total AVG² | 16.20 | 16.74 | 0.269 | 0.261 |
| Platelet, 100-800K/ul | | | | | |
| | 0 wk | 318.25 | 297.67 | 34.026 | 0.155 |
| | total AVG² | 294.73 | 331.35 | 20.419 | 0.553 |

| | | | | | |
|---|---|---|---|---|---|
| ¹Treatment = control, basal diet(n = 8); NALT, 15 g per kg of basal diet(n = 4). ²total AVG = average of each item with 0 to 6 weeks Items = WBC, white blood cell; MCV, mean corpuscular volume; MCH, mean corpuscular hemoglobin; | | | | | |

**Table 6**

| Change in hematological properties of dairy cattle after calving according to NALT feeding | | | | | |
|---|---|---|---|---|---|
| Item | | Treatment¹ | | | |
| | | Control | NALT | SEM | P-value |
| WBC, 4-12K/uL | | | | | |
| | 0 wk | 11.75 | 15.32 | 2.327 | 0.313 |
| | total AVG² | 10.10 | 13.95 | 1.554 | 0.242 |
| Lymphocyte, 2.5-7.5K/uL | | | | | |
| | 0 wk | 5.57 | 7.99 | 1.333 | 0.226 |
| | total AVG² | 4.98 | 7.86 | 1.438 | 0.356 |
| Monocyte, 0-0.84K/uL | | | | | |
| | 0 wk | 1.10 | 0.92 | 0.207 | 0.632 |
| | total AVG² | 0.85 | 0.91 | 0.067 | 0.668 |
| Granulocyte, 0.6-6.7K/uL | | | | | |
| | 0 wk | 5.08 | 6.41 | 1.111 | 0.541 |
| | total AVG² | 4.27 | 5.18 | 0.414 | 0.303 |
| HCV, 40-60fL | | | | | |
| | 0 wk | 46.25 | 47.00 | 6.100 | 0.666 |
| | total AVG² | 45.20 | 46.55 | 0.869 | 0.480 |
| MCH, 11-17pg | | | | | |
| | 0 wk | 16.45 | 16.80 | 2.183 | 0.485 |
| | total AVG² | 16.03 | 16.60 | 0.241 | 0.266 |
| Platelet, 100-800K/ul | | | | | |
| | 0 vk | 304.50 | 348.75 | 44.919 | 0.361 |
| | total AVG² | 447.15 | 480.51 | 26.278 | 0.567 |

| | | | | | |
|---|---|---|---|---|---|
| ¹Treatment = control, basal diet(n = 8); NALT, 15 g per kg of basal diet(n = 4), ²total AVG = average of each item with 0 to 8 weeks Items = VBC, white blood cell; MCV, mean corpuscular volume; MCH, mean corpuscular hemoglobin; | | | | | |

Meanwhile, analysis results of changes in hematological properties of calves born from the control and the NALT-treated dairy cattle for 8 weeks after birth are as shown in Table 7. Specifically, newborn calves born from the NALT-treated dairy cattle showed a statistically significant difference in the monocyte index when compared with newborn calves born from the control dairy cattle and a statistically significant difference in initial indexes of the mean corpuscular volume (MCV) and the mean corpuscular hemoglobin (MCH).

**Table 7**

| Change in hematological properties of calves born from dairy cattle according to NALT feeding | | | | | |
|---|---|---|---|---|---|
| | | **Treatment¹** | | | |
| | | **Control** | **NALT** | **SEM** | **P-value** |
| WBC, 4-12K/uL | | | | | |
| | 0 wk | 9.48 | 13.72 | 1.298 | 0.103 |
| | total AVG² | 11.02 | 12.14 | 0.320 | 0.073 |
| Lymphocyte, 2.5-7.5K/uL | | | | | |
| | 0 wk | 4.23 | 3.72 | 0.512 | 0.657 |
| | total AVG² | 6.43 | 6.93 | 0.448 | 0.616 |
| Monocyte, 0-0.84K/uL | | | | | |
| | 0 wk | 0.51 | 0.32 | 0.144 | 0.555 |
| | total AVG² | 0.82 | 0.53 | 0.074 | 0.031* |
| Granulocyte, 0.6-6.7K/uL | | | | | |
| | 0 wk | 4.74 | 9.68 | 1.406 | 0.073 |
| | total AVG² | 3.77 | 4.69 | 0.418 | 0.306 |
| MCV,40-60fL | | | | | |
| | 0 wk | 36.25 | 39.00 | 0.680 | 0.027* |
| | total AVG² | 30.45 | 31.80 | 0.683 | 0.389 |
| MCH, 11-17pg | | | | | |
| | 0 wk | 12.05 | 12.95 | 0.245 | 0.056* |
| | total AVG² | 10.89 | 11.20 | 0.261 | 0.608 |
| Platelet, 100-800K/ul | | | | | |
| | 0 wk | 317.25 | 512.75 | 79.909 | 0.249 |
| | total AVG² | 515.40 | 584.35 | 53.237 | 0.559 |

| | | | | | |
|---|---|---|---|---|---|
| ¹Treatment = control, basal diet(n = 8); NALT, 15 g per kg of basal diet(n = 4). ²total AVG =average of each item with 0 to 8 weeks Items = WBC, white blood cell; MCV, mean corpuscular volume; MCH, mean corpuscular hemoglobin; *<0.05, the value is significant | | | | | |

When the feed additive composition for dairy cattle including NALT as an active ingredient of the present disclosure was fed, it was confirmed that an increased amount of absorption of L-tryptophan in the small intestine had positive effects on immune response of the calves born from dairy cattle and enhancing immunity.

### Example 5-2. Analysis of Metabolic Change

Samples for analysis of metabolic changes such as albumin, glutamic-oxalacetic transaminase (GOT), blood urea nitrogen (BUN), triglycerides (TG), cholesterol (CHO), glucose (GLU), and non-esterified fatty acid (NEFA) were aliquoted into a 1.5 mL tube (Eppendorf AG, Hamburg, Germany) in an amount of 500 µL each and stored in a deep freezer at -80°C.

Analysis results of metabolic changes of the control and the NALT-treated dairy cattle for 6 weeks of the dry period and 8 weeks of the experiment after calving are as shown in Table 8 (dry period) and Table 9 (after calving). Metabolic changes of the NALT-treated dairy cattle were not significantly different from metabolic changes of the control dairy cattle. That is, the feeding of NALT did not significantly affect metabolic changes of the dairy cattle during the dry period or after calving.

**Table 8**

| Metabolic change of dairy cattle in dry period according to NALT feeding | | | | | |
|---|---|---|---|---|---|
| Item | | Treatment¹ | | | |
| | | Control | NALT | SEM | P-value |
| Albumin (g/dL) | | | | | |
| | 0 wk | 3.85 | 3.93 | 0.069 | 0.627 |
| | total AVG² | 3.68 | 3.74 | 0.035 | 0.502 |
| GOT (U/L) | | | | | |
| | 0 wk | 84.25 | 82.50 | 6.005 | 0.910 |
| | total AVG² | 68.56 | 80.92 | 3.459 | 0.125 |
| BUN (mg/dL) | | | | | |
| | 0 wk | 12.00 | 12.25 | 0.766 | 0.885 |
| | total AVG² | 11.10 | 9.88 | 0.616 | 0.374 |
| TG (mg/dL) | | | | | |
| | 0 wk | 19.00 | 16.25 | 3.306 | 0.710 |
| | total AVG² | 22.46 | 19.88 | 1.134 | 0.305 |
| CHO (mg/dL) | | | | | |
| | 0 wk | 157.25 | 194.00 | 15.660 | 0.271 |
| | total AVG² | 129.90 | 143.08 | 6.949 | 0.379 |
| GLU (mg/dL) | | | | | |
| | 0 wk | 54.00 | 50.00 | 2.283 | 0.423 |
| | total AVG² | 54.04 | 50.52 | 1.837 | 0.470 |
| NEFA (mmol/L) | | | | | |
| | 0 wk | 292.73 | 805.83 | 263.920 | 0.404 |
| | total AVG² | 399.60 | 480.13 | 70.863 | 0.521 |

| | | | | | |
|---|---|---|---|---|---|
| ¹Treatment = control, basal diet(n = 8); NALT, 15 g per kg of basal diet(n = 4). ²total AVG = average of each item with 0 to 6 weeks Items = GOT, Glutamic-oxalacetic transaminase; BUN, Blood urea nitrogen; TG, Triglycerides; CHO, Cholesterol; GLU, Glucose; NEFA, Non-esterified fatty acid | | | | | |

**Table 9**

| Metabolic change of dairy cattle after calving according to NALT feeding | | | | | |
|---|---|---|---|---|---|
| | | Treatment¹ | | | |
| | | Control | HALT | SEM | P-value |
| Albumin (g/dL) | | | | | |
| | 0 wk | 3.53 | 3.73 | 0.094 | 0.323 |
| | total AVG² | 3.88 | 4.01 | 0.097 | 0.547 |
| GOT (U/L) | | | | | |
| | 0 wk | 68.00 | 87.00 | 9.214 | 0.340 |
| | total AVG² | 83.65 | 89.55 | 2.388 | 0.234 |
| BUN (mg/dL) | | | | | |
| | 0 wk | 16.25 | 10.75 | 1.648 | 0.093** |
| | total AVG² | 17.95 | 16.75 | 0.784 | 0.487 |
| TG (mg/dL) | | | | | |
| | 0 wk | 7.50 | 8.00 | 0.620 | 0.718 |
| | total AVG² | 9.05 | 9.45 | 0.401 | 0.655 |
| CHO (mg/dL) | | | | | |
| | 0 wk | 88.25 | 101.25 | 8.269 | 0.475 |
| | total AVG² | 164.10 | 188.45 | 10.093 | 0.256 |
| GLU (mg/dL) | | | | | |
| | 0 wk | 111.75 | 83.75 | 16.755 | 0.448 |
| | total AVG² | 75.20 | 68.35 | 3.104 | 0.304 |
| NEFA (mmol/L) | | | | | |
| | 0 wk | 375.20 | 534.85 | 83.004 | 0.376 |
| | total AVG² | 198.49 | 301.27 | 38.480 | 0.202 |

| | | | | | |
|---|---|---|---|---|---|
| ¹Treatment = control, basal diet(n = 8); HALT, 15 g per kg of basal diet(n = 4) . ²total AVG = average of each item with 0 to 8 weeks Items = GOT, Glutamic-oxalacetic transaminase: BUN, Blood urea nitrogen; TG, Triglycerides; CHO, Cholesterol ; GLU, Glucose: NEFA, Non-esterified fatty acid ***P* < 0.10. the value has the trend | | | | | |

Analysis results of metabolic changes of newborn calves of the control and the NALT-treated group for 8 weeks after birth are shown in Table 10. Specifically, the newborn calves of the NALT-treated group showed a statistically significant difference in the glucose (Glu) index when compared with the newborn calves of the control.

**Table 10**

| Metabolic change of calves born from dairy cattle according to NALT feeding | | | | | |
|---|---|---|---|---|---|
| | | Treatment¹ | | | |
| | | Control | NALT | SEM | P-value |
| Albumin (g/dL) | | | | | |
| | 0 wk | 2.58 | 2.50 | 0.050 | 0.494 |
| | total AVG² | 3.44 | 3.36 | 0.001 | 0.696 |
| GOT (U/L) | | | | | |
| | 0 wk | 67.00 | 47.25 | 9.029 | 0.309 |
| | total AVG² | 65.00 | 62.55 | 2.623 | 0.676 |
| BUN (mg/dL) | | | | | |
| | 0 wk | 12.75 | 10.00 | 1.451 | 0.384 |
| | total AVG² | 11.50 | 11.30 | 0.688 | 0.897 |
| TG (mg/dL) | | | | | |
| | 0 wk | 20.75 | 14.50 | 3.703 | 0.441 |
| | total AVG² | 37.95 | 34.40 | 4.570 | 0.729 |
| CHO (mg/dL) | | | | | |
| | 0 wk | 26.50 | 33.00 | 2.194 | 0.149 |
| | total AVG² | 98.35 | 109.30 | 6.935 | 0.473 |
| GLU (mg/dL) | | | | | |
| | 0 vk | 78.00 | 54.75 | 13.518 | 0.432 |
| | total AVG² | 97.85 | 78.95 | 4.416 | 0.015* |
| NEFA (mmol/L) | | | | | |
| | 0 wk | 379.53 | 427.43 | 64.019 | 0.738 |
| | total AVG² | 219.64 | 210.55 | 17.321 | 0.815 |

| | | | | | |
|---|---|---|---|---|---|
| ¹Treatment = control, basal diet(n = 8); NALT, 15 g per kg of basal diet(n = 4). ²total AVG = average of each item with 0 to 8 weeks Items = GOT, Glutamic-oxalacetic transaminase; BUN, Blood urea nitrogen: TG, Triglycerides; CHO, Cholesterol ; GLU, Glucose; NEFA, Non-esterified fatty acid **P* < 0.05, the value is significant | | | | | |

When the feed additive composition for dairy cattle including NALT as an active ingredient of the present disclosure was fed, an amount of absorption of L-tryptophan increased in the small intestine, and thus the ability to digest starch was improved, thereby decreasing a blood glucose level in the calves born from dairy cattle.

### Reference Example. Statistical Analysis

Average values of performance for evaluation obtained in the above-described analyses were calculated on a weekly basis, and statistical analysis of the results of the experiment was performed using Student's t-test by using the SPSS Ver. 24 program (IBM support; http://www01.ibm.com/support/). Statistical differences were considered significant at p<0.05.

## Claims

1. A feed additive composition for dairy cattle comprising *N*-acetyl-L-tryptophan as an active ingredient for use in enhancing immunity of a calf born from dairy cattle.

2. The feed additive composition for use of claim 1, wherein the dairy cattle are dry cows.

3. The feed additive composition for use of claim 1, wherein the *N*-acetyl-L-tryptophan is comprised in an amount of 0.01% (w/w) to 5.0% (w/w) based on a dry weight of a feed.

4. A feed for use in enhancing immunity of a calf born from dairy cattle, comprising the feed additive composition for use according to any one of claims 1 to 3.

## Patentansprüche

1. Futterzusatzzusammensetzung für Milchkühe, enthaltend *N*-Acetyl-L-Tryptophan als Wirkstoff, zur Verwendung zur Verbesserung der Immunität eines Kalbs, welches von Milchkühen geboren wurde.

2. Futterzusatzzusammensetzung zur Verwendung gemäß Anspruch 1, wobei es sich bei den Milchkühen um trockengestellte Kühe handelt.

3. Futterzusatzzusammensetzung zur Verwendung gemäß Anspruch 1, wobei das N-Acetyl-L-Tryptophan in einer Menge von 0.01% (m/m) bis 5,0% (m/m) enthaltend ist, bezogen auf das Trockengewicht eines Futters.

4. Futtermittel zur Verwendung zur Verbesserung der Immunität eines Kalbs, welches von Milchkühen geboren wurde, umfassend die Futterzusatzzusammensetzung zur Verwendung gemäß einem der Ansprüche 1 bis 3.

## Revendications

1. Composition d'additif d'alimentation pour bétail laitier, comprenant du N-acétyl-L-tryptophane en tant qu'ingrédient actif, pour utilisation dans l'amélioration de l'immunité d'un veau né de bétail laitier.

2. Composition d'additif d'alimentation pour utilisation de la revendication 1, dans laquelle le bétail laitier sont des vaches taries.

3. Composition d'additif d'alimentation pour utilisation de la revendication 1, dans laquelle le N-acétyl-L-tryptophane est compris en une quantité de 0,01 % (p/p) à 5,0 % (p/p) sur la base d'un poids sec d'une alimentation.

4. Alimentation pour utilisation dans l'amélioration de l'immunité d'un veau né de bétail laitier, comprenant la composition d'additif d'alimentation pour utilisation selon de quelconques des revendications 1 à 3.
